# EUROPÄISCHE PATENTANMELDUNG

(11) **EP 3 096 200 A1**
(43) Veröffentlichungstag der Anmeldung: **23.11.2016**
(21) Anmeldenummer: 15168811.6
(22) Anmeldetag: 22.05.2015
(51) Int. Cl.: G06F 1/14, G06F 1/12, G06F 1/06

(54) **VERFAHREN UND VORRICHTUNG ZUR ERZEUGUNG EINES EREIGNISSIGNALS, UND INDUSTRIELLES STEUERUNGSSYSTEM**

(71) Anmelder: Siemens Aktiengesellschaft, 80333 München (DE)
(72) Erfinder: Steindl, Günter, 92284 Poppenricht (DE)

(57) **Zusammenfassung**

Um eine Synchronisation bei isochronen Applikationen zu verbessern, wird ein Verfahren zur Erzeugung eines Ereignis-Signals (21), wobei zur Synchronisierung einer Taktquelle (3) mit einer Systemuhr (100) stetig die Abweichung zueinander berechnet wird und die Taktquelle entsprechend angepasst wird und gleichzeitig werden synchrone Ereignis-Signale (21) erzeugt.

## Beschreibung

Für viele Applikationen in der digitalen Datenverarbeitung ist ein Zeitbezug bei der Bearbeitung von Applikationsaufgaben und Kommunikationsaufgaben bzw. zwischen den über die Kommunikation verbundenen Applikationen erforderlich. Diese Anforderung führt oftmals dazu, dass Applikationen grundsätzlich getaktet arbeiten. Dadurch ergibt sich direkt das Problem, den Übergang zwischen freilaufend getaktet und ferngesteuert getaktet und umgekehrt in den Griff zu bekommen. Des Weiteren verteilen sich oftmals die Aufgaben auf mehrere Prozessoren, so dass Applikation und Kommunikation über asynchrone Busse, wie z.B. PCIe getrennt sind.

Damit ergibt sich zum einen die Aufgabe ein komplettes System mit einer lokalen Referenzzeit zu versorgen, zum anderen die Applikation freilaufend oder ferngesteuert zu betreiben.

Da die Kommunikation durch asynchrone Busse wie z.B. PCIe abgetrennt ist, und auch durch Steckkarten-Technik keine Sideband-Signale genutzt werden können, muss eine unabhängige Lösung für die Applikation gefunden werden.

Es ist demnach die Aufgabe der vorliegenden Erfindung für Applikationen oder Prozessoren einen zeitlichen Synchronisationsmechanismus bereitzustellen, welcher unabhängig ist von einer zeitlichen Synchronisation, beispielsweise über einen PCIe-Bus.

Gelöst wird die Aufgabe durch ein Verfahren zur Erzeugung eines Ereignis-Signals, wobei zur Synchronisierung einer Taktquelle mit einer Systemuhr stetig wiederholend folgende Schritte ausgeführt werden:
- Laden eines Zähler-Registers mit einem Startwert, für den Fall, dass der Wert des Zähler-Registers einem Endwert entspricht und Starten des Zähler-Registers, wobei dadurch der Startwert mit Hilfe der Taktquelle in einem Zähltakt entweder inkrementiert oder dekrementiert wird,
- zyklisches Prüfen, ob der Wert in dem Zähler-Register den Endwert erreicht hat und mit dem Zeitpunkt, bei welchem der Endwert erreicht ist, wird die aktuelle Zeit der Systemuhr in einen Systemuhrspeicher geladen,
- Errechnen einer möglicherweise zwischen der Systemuhr und der Taktquelle entstandenen zeitlichen Verschiebung durch eine Restdivision, wobei der Startwert der Divisor ist und der Dividend die Zeit im Systemuhrspeicher ist,
- für den Fall, dass die Restdivision eine Verschiebung ungleich Null ergibt, wird die Taktquelle derart angepasst, dass bei einer zukünftigen Restdivision nach einem erneuten Erreichen des Endwertes die Verschiebung minimiert wird,
   und
   zur Erzeugung des Ereignis-Signals stetig wiederholend folgender Schritt ausgeführt wird:
- zyklischer Vergleich eines Wertes eines Signal-Taktes mit dem aktuellen Wert des Zähler-Registers und für den Fall, dass der aktuelle Wert des Zähler-Registers den Wert des Signal-Taktes erreicht hat, wird mit dem Zeitpunkt des Erreichens das Ereignis-Signal erzeugt.

Eine angestrebte Minimierung der Zeitverschiebung sollte vorzugsweise nicht zu schnell erfolgen, eine maximale Frequenzänderungsgeschwindigkeit ist beispielsweise extern vorgegeben, vorzugsweise wird heute mit 5 ppm pro Sekunde gearbeitet. Die Systemzeit ist vorzugsweise als eine globale Systemzeit anzusehen.

Im Sinne der Erfindung ist unter Inkrementieren und Dekrementieren folgendes zu verstehen. Wenn inkrementiert wird, also beispielsweise mit Null gestartet wird, dann wird der Startwert geladen, zu dem der Zähler wieder von Null starten soll. Wenn dekrementiert wird, dann wird der Zähler beim Nulldurchgang mit dem Wert geladen, den er dann wieder dekrementiert. Vorzugsweise wird das Verfahren zum Einsatz in der industriellen Kommunikation für den Betrieb von isochronen Applikationen genutzt.

Eine besonders vorteilhafte Ausgestaltung des Verfahrens sieht vor, dass die Werte: Startwert, Endwert und Signal-Takt im Rahmen einer Feldbusprojektierung mittels eines Engineeringsystems für einen taktsynchronen Datenaustausch vorgegeben werden. Im Hinblick auf die zeitliche Unabhängigkeit einer einzelnen Applikation oder einer einzelnen Vorrichtung ist es von besonderem Vorteil, wenn bei Ausfall der Systemuhr dies durch das Verfahren erkannt wird und die Erzeugung des Ereignis-Signals auch ohne eine Synchronisierung der Taktquelle mit der Systemuhr erfolgt, wobei bei Wiederkehr der Systemuhr die Taktquelle erneut synchronisiert wird ohne die Erzeugung des Ereignis-Signals zu unterbrechen. Die jeweilige Applikation oder Vorrichtung bleibt damit unbeeinflusst wenn die kommunikativ gesteuerte Zeit (Systemzeit) ausfällt/wiederkehrt. Nach dem Stand der Technik wurden bisher Sideband-Signale verwendet, um die erforderlichen Ereignisse von der Kommunikation zur Applikation zu übertragen. Fiel die kommunikative Regelung über die Systemzeit aus, so wurde entweder auf einen freilaufenden Betrieb umgeschaltet - mit den entsprechenden Aufwänden in der Applikation - oder ein nicht mehr steuerbarer Ersatztakt wurde verwendet. Da beides bei einem Betrieb und einer Verbindung über asynchrone Busse nicht mehr mit der geforderten Performance bzw. mit der geforderten Genauigkeit und auch wegen der fehlenden Zeit-Signale funktioniert, wird verfahrensgemäß eine Taktquelle bereitgestellt, welche für sich alleine eine Uhrzeit vorgeben kann, aber dennoch mit einer Systemuhr synchronisiert werden kann.

Vorzugsweise werden eine Mehrzahl von Ereignis-Signalen erzeugt, wobei für die Erzeugung der weiteren Ereignis-Signale zyklische Vergleiche von weiteren Werten von weiteren Signal-Takten mit dem aktuellen Wert des Zähler-Registers erfolgen und für den Fall, dass der aktuelle Wert des Zähler-Registers den Wert eines der Signal-Takte erreicht hat, wird mit dem Zeitpunkt des Erreichens das entsprechende Ereignis-Signal erzeugt. Auf diese Art und Weise können mehrere Applikationen mit unterschiedlichen Ereignis-Signalen bzw. Zeit-Takten versorgt werden.

Die eingangs genannte Aufgabe wird ebenfalls durch eine Vorrichtung gelöst. Die Vorrichtung zur Erzeugung eines Ereignis-Signals, weist zum einen einen Synchronisationsteil auf, mit einem Eingang zum Einlesen einer Zeit einer Systemuhr in einem Systemuhrspeicher, einer Taktquelle mit einem steuerbaren Zähltakt, einem Zähler-Register, ausgestaltet einen Startwert zu laden und den Startwert mit Hilfe der Taktquelle schrittweise zu inkrementieren oder zu dekrementieren, einem Prüfmittel, ausgestaltet zu Prüfen, ob der momentane Wert des Zähler-Registers einen Endwert erreicht hat, und für den Fall, dass der Endwert erreicht ist, einen Ladebefehl an den Systemuhrspeicher zum Laden der momentanen Zeit der Systemuhr auszugeben, einem Divisionsmittel, ausgestaltet eine möglicherweise zwischen der Systemuhr und der Taktquelle entstandene zeitliche Verschiebung durch eine Restdivision zu ermitteln, wobei der Startwert der Divisor ist und der Dividend die Zeit im Systemuhrspeicher ist, einen Kompensationsmittel ausgestaltet für den Fall, dass die Restdivision eine Verschiebung ungleich Null ergibt, die Taktquelle derart zu steuern, dass bei einer zukünftigen Restdivision nach einem erneuten Erreichen des Endwertes die Verschiebung minimiert wird, und zum anderen weist die Vorrichtung einen Signalteil auf, ausgestaltet mit einem Ausgang zum Ausgeben des Ereignis-Signals, einer Vergleichseinheit ausgestaltet kontinuierlich einen Vergleich des aktuellen Wertes des Zähler-Registers und einem Wert eines Signal-Taktes durchzuführen, weiterhin ausgestaltet mit dem Zeitpunkt des Erreichens des Wertes des Signaltaktes das Ereignis-Signal zu erzeugen. Bei einer vorzugsweise Projektierung einer industriellen Kommunikationsanlage ist es von Vorteil, wenn die Vorrichtung mit einer Programmierschnittstelle ausgestaltet ist, wobei Speicherbereiche für die Werte Startwert, Endwert und Signal-Takt vorhanden sind, welche im Rahmen einer Feldbusprojektierung mittels eines Engineering-Systems über die Programmierschnittstelle parametrierbar sind.

Da die Vorrichtung ein eigenständiges System zur Uhrzeit-Generierung ist, ist es vorzugsweise derart ausgestaltet, einen Ausfall der Systemuhr zu erkennen, und die Erzeugung des Ereignis-Signals auch ohne eine Synchronisierung der Taktquelle mit der Systemuhr weiterzuführen, wobei bei Wiederkehr der Systemuhr die Taktquelle erneut synchronisierbar ist, ohne die Erzeugung des Ereignis-Signals zu unterbrechen.

Vorzugsweise weist die Vorrichtung eine Mehrzahl an Vergleichseinheiten auf, welche ausgestaltet sind, jeweils kontinuierlich einen Vergleich des aktuellen Wertes des Zähler-Registers mit einem entsprechend zugehörigen Wert eines Signal-Taktes durchzuführen, weiterhin ausgestaltet mit dem jeweiligen Zeitpunkt des Erreichens des jeweiligen Wertes des Signal-Taktes ein jeweiliges Ereignis-Signal zu erzeugen, weiterhin aufweisend eine Mehrzahl an Ausgängen zum Ausgeben des jeweiligen Ereignis-Signales.

Auch wird die eingangs genannte Aufgabe durch ein industrielles Steuerungssystems bei welchem eine Mehrzahl an Funktionssystemen miteinander synchronisiert werden müssen, gelöst. Dazu weist das industrielle Steuerungssystem eine Vorrichtung nach einem der Ansprüche 6 bis 9 auf, wobei zumindest ein Funktionssystem als ein Ein-/Ausgabeperipherie-Baustein für industrielle Prozesswerte ausgestaltet ist und weiterhin ausgestaltet ist durch einen angeschlossenen Ausgang mit Hilfe des Ereignis-Signals die Prozesswerte zu bestimmten Zeitpunkten zu übernehmen.

Ein Ausführungsbeispiel und nähere Erläuterung zeigt die Zeichnung, dabei zeigt die
- FIG 1: eine Vorrichtung zur Erzeugung mehrerer Ereignisse-Signale,
- FIG 2: einen Prozessorbaustein mit einer integrierten Vorrichtung zur Erzeugung der Ereignis-Signale um mehrere Applikationen zu synchronisieren und
- FIG 3: ein industrielles Steuerungssystem mit einer integrierten Vorrichtung zur Erzeugung mehrerer Ereignis-Signale.

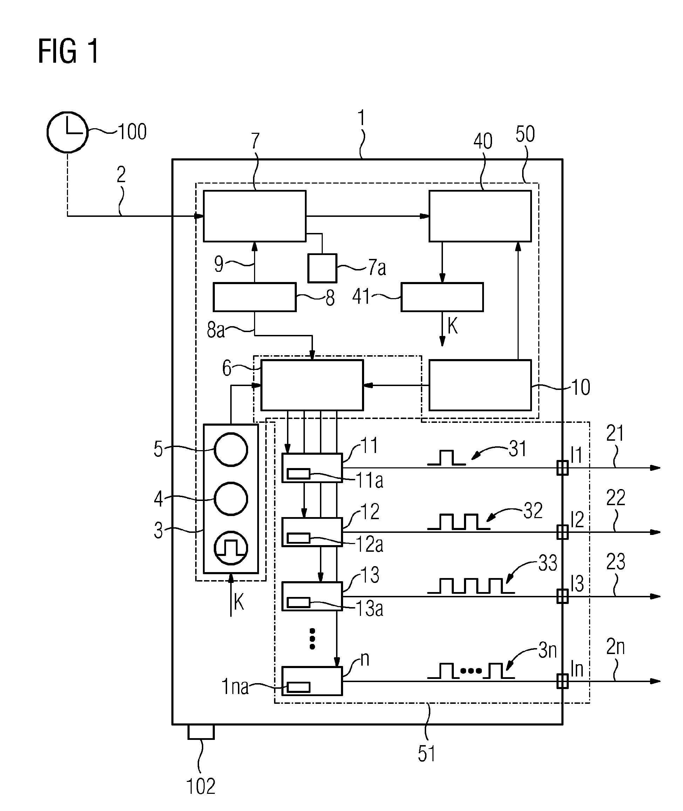

Gemäß der FIG 1 ist eine Vorrichtung 1 zur Erzeugung mehrerer Ereignis-Signale 21,22,23,..,2n dargestellt. Die Vorrichtung 1 weist einen Synchronisationsteil 50 und einen Signalteil 51 auf.

Der Synchronisationsteil 50 besitzt einen Eingang 2 zum Einlesen einer Zeit einer Systemuhr 100 in einen Systemuhrspeicher 7 und eine Taktquelle 3 mit einem steuerbaren Zähltakt 4 und einem steuerbaren Zählschritt 5. Die Taktquelle 3 kann als eine eigene Uhr für die Vorrichtung 1 angesehen werden und ist derart ausgestaltet, dass sie eine steuerbare Zeit-/Taktquelle für über Ausgänge I1,I2,..,In angeschlossene Applikationen ist.

Weiterhin weist die Vorrichtung 1 ein Zähler-Register 6 auf, welches ausgestaltet ist, einen Startwert 10 zu laden und den Startwert 10 mit Hilfe der Taktquelle 3 schrittweise zu inkrementieren oder zu dekrementieren. Ein Prüfmittel 8 ist ausgestaltet zu prüfen, ob der momentane Wert des Zähler-Registers 6 einen Endwert 10a erreicht hat und für den Fall, dass der Endwert 10a erreicht ist einen Ladebefehl 9 an den Systemuhrspeicher 7 zum Laden der momentanen Zeit der Systemuhr 100 auszugeben.

Im Hinblick auf einen Synchronlauf der Taktquelle 3 mit der Systemuhr 100 weist die Vorrichtung ein Divisionsmittel 40 auf. Das Divisionsmittel 40 ist ausgestaltet, eine möglicherweise zwischen der Systemuhr 100 und der Taktquelle 3 entstandene zeitliche Verschiebung durch eine Restdivision zu ermitteln, wobei der Startwert 10 der Divisor ist und der Dividend die Zeit im Systemuhrspeicher 7 ist.

Um eine mögliche zeitliche Verschiebung zwischen der Systemuhr 100 und der Taktquelle 3 zu kompensieren, weist die Vorrichtung 1 ein Kompensationsmittel 41 auf, welches ausgestaltet ist, für den Fall, dass die Restdivision eine Verschiebung ungleich Null ergibt, die Taktquelle 3 derart zu steuern, das bei einer zukünftigen Restdivision nach einem erneuten Erreichen des Endwertes 10a die Verschiebung minimiert wird. Das Kompensationsmittel 41 weist dazu einen Ausgang für Kompensationsdaten K auf. Diese Kompensationsdaten K können von der Taktquelle 3 empfangen werden und es kann steuernd auf die "Zeit" der Taktquelle 3 Eingriff genommen werden, es wird beispielsweise der Zähltakt 4 oder der Zählschritt 5 angepasst.

Der Signalteil 51 ist ausgestaltet, über einen ersten Ausgang I1, einen zweiten Ausgang 12, einen dritten Ausgang 13, .. bis zu einem n-ten Ausgang In ein erstes Ereignis-Signal 21, ein zweites Ereignis-Signal 22, ein drittes Ereignis-Signal 23, .. bis zu einem n-ten Ereignis-Signal 2n bereitzustellen. Für die Bereitstellung eines Ereignis-Signals 21,22,23,..,2n ist jeweils eine Vergleichseinheit 11,12,13,..,1n vorhanden. Die erste Vergleichseinheit 11 ist ausgestaltet kontinuierlich einen Vergleich des aktuellen Wertes des Zähler-Registers 6 mit einem Wert eines ersten Signal-Taktes 31 durchzuführen, weiterhin ist die erste Vergleichseinheit 11 ausgestaltet mit dem Zeitpunkt des Erreichens des Wertes des ersten Signaltaktes 31 das erste Ereignis-Signal 21 zu erzeugen. Ebenfalls ist die zweite Vergleichseinheit 12 ausgestaltet kontinuierlich einen Vergleich des aktuellen Wertes des Zähler-Registers 6 mit einem Wert eines zweiten Signal-Taktes 32 durchzuführen, und ebenfalls ausgestaltet mit dem Zeitpunkt des Erreichens des Wertes des zweiten Signaltaktes 32 das zweite Ereignis-Signal 22 zu erzeugen. Analog zu dem zuvor gesagten, sind die dritte Vergleichseinheit 13 bis zur n-ten Vergleichseinheit 1n ähnlich ausgestaltet. Die Werte für die unterschiedlichen Signal-Takte 31,32,33,..,3n sind in einem ersten Speicherbereich 11a, einem zweiten Speicherbereich 12a, einem dritten Speicherbereich 13a,.. bis zu einem n-ten Speicherbereich 1na hinterlegt. Die Speicherbereiche 11a,12a,13a,..,1na befinden sich vorzugsweise in den jeweiligen Vergleichseinheiten 11,..,1n.

Um die Werte Startwert 10, Endwert 10a und Signal-Takte 31,..,3n im Rahmen einer Feldbusprojektierung vorzugeben, weist die Vorrichtung 1 eine Programmierschnittstelle 102 auf. Über die Programmierschnittstelle 102 sind die genannten Werte mittels eines Engineeringsystems 101 parametrierbar.

Mit einem Ausfallerkennungsmittel 7a verfügt die Vorrichtung über ein Mittel, welches ausgestaltet ist, einen Ausfall der Systemuhr 100 zu erkennen und die Erzeugung der Ereignis-Signale auch ohne eine Synchronisierung der Taktquelle mit der Systemuhr 100 weiterzuführen, wobei bei Wiederkehr der Systemuhr 100 die Taktquelle 3 erneut synchronisierbar ist, ohne die Erzeugung der Ereignis-Signale zu unterbrechen.

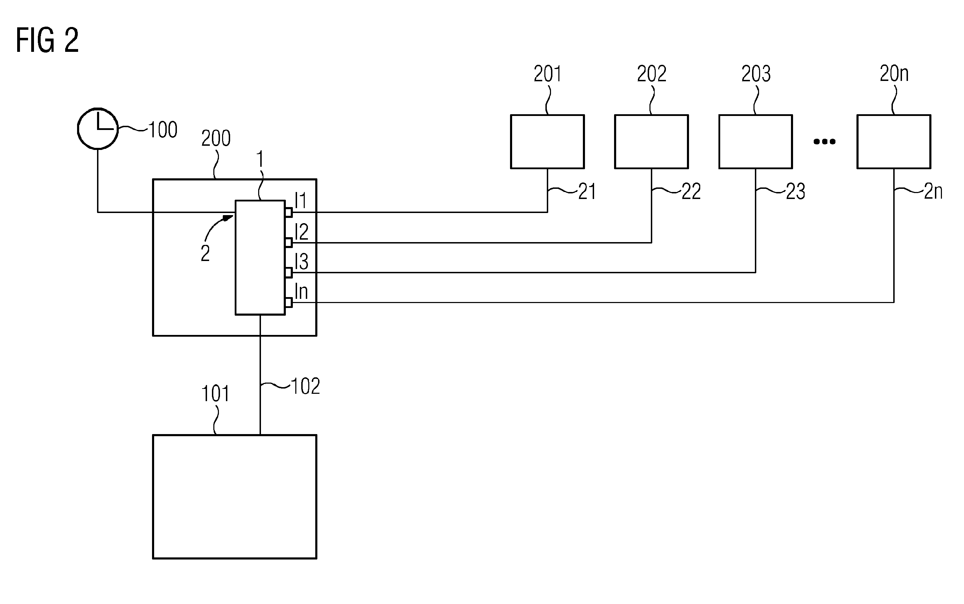

Mit der FIG 2 ist die Vorrichtung 1 in einem Ausführungsbeispiel für einen Prozessorbaustein 200 dargestellt. Der Prozessorbaustein 200 hat die Aufgabe eine erste Applikation 201, eine zweite Applikation 202, eine dritte Applikation 203, bis hin zu einer n-ten Applikation 20n zu betreiben und mit Daten zu versorgen, wobei dazu die Applikationen synchronisiert zueinander laufen müssen. Der Prozessorbaustein 200 erhält über die Systemuhr 100 die Systemzeit, wobei in der Vorrichtung 1 aus der Systemzeit zum einen eine eigene Uhr synchronisiert wird, wobei die eigene Uhr in der Vorrichtung 1 der Taktquelle 3 entspricht und zum anderen unterschiedliche Ereignis-Signale 21,..,2n mit unterschiedlichen Takten für die unterschiedlichen Applikationen erzeugt werden. Mittels des angeschlossenen Engineeringsystems 101 kann über die Programmierschnittstelle 102 der Prozessorbaustein 200 mit seiner integrierten Vorrichtung 1 parametriert werden.

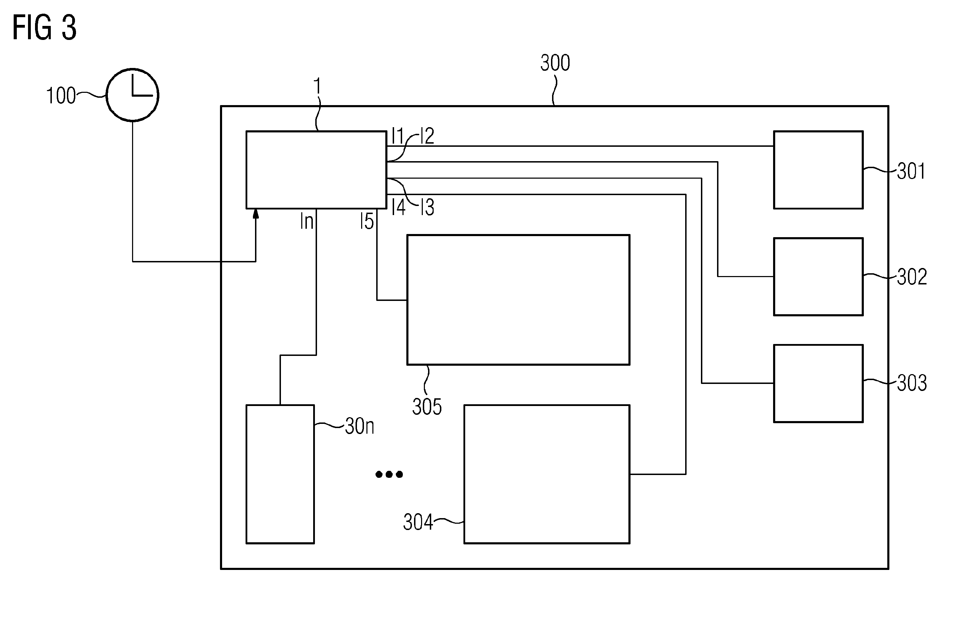

Die FIG 3 zeigt ein industrielles Steuerungssystem 300, beispielsweise eine speicherprogrammierbare Steuerung (SPS). Das industrielle Steuerungssystem 300 ist beispielsweise als ein System on Chip (SoC) ausgestaltet. Das industrielle Steuerungssystem 300 weist mehrere Funktionssysteme auf. Ein erstes Funktionssystem 300, beispielsweise ausgestaltet als GPIO's des SoC, ein zweites Funktionssystem 302, beispielsweise ausgestaltet als ein Ein-/Ausgabeperipherie-Baustein für Onboard Ein- und Ausgänge der SPS, ein drittes Funktionssystem 303, beispielsweise ausgestaltet als ein erster Feldbusbaustein für eine PROFIBus Kommunikation, ein viertes Funktionssystem 304, beispielsweise ausgestaltet als ein zweiter Feldbus-Baustein für eine PROFINet Kommunikation und ein fünftes Funktionssystem 305, beispielsweise ausgestaltet als der eigentliche Prozessorkern.

Weitere Funktionssysteme, wie ein n-tes Funktionssystem 30n sind denkbar, so könnte das industrielle Steuerungssystem 300 ausgestaltet als ein SoC mehrere Prozessorkerne aufweisen.

Für eine Zeitsynchronisierung weist das industrielle Steuerungssystem 300 die bereits bekannte Vorrichtung 1 auf. Die Vorrichtung 1 ist wiederum an eine Systemuhr 100 angeschlossen und weist die bereits bekannten Ausgänge I1,I2,I3,I4,I5,..,In für die Bereitstellung der entsprechenden Ereignis-Signale auf. Dadurch erhält das erste Funktionssystem 301 das erste Ereignis-Signal 21 in Form eines Signal-taktes 31, das zweite Funktionssystem 302 erhält ein zweites Ereignis-Signal 22 in Form eines zweiten Signaltaktes 32 usw..

Durch die Erfindung der Vorrichtung 1 und die Anbindung der Vorrichtung 1 an eine übergeordnete Systemzeit werden präzise synchronisierte, performant angebundene SPS'n und/oder Motion Controller auf einer Multichip-Plattform, wie beispielsweise ein SoC möglich.

## Patentansprüche

1. Verfahren zur Erzeugung eines Ereignis-Signals (21), wobei zur Synchronisierung einer Taktquelle (3) mit einer Systemuhr (100) stetig wiederholend folgende Schritte ausgeführt werden:
- Laden eines Zähler-Registers (6) mit einem Startwert (10), für den Fall, dass der Wert des Zähler-Registers (6) einem Endwert (10a) entspricht und Starten des Zähler-Registers (6), wobei dadurch der Startwert (10) mit Hilfe der Taktquelle (3) in einem Zähltakt (4) entweder inkrementiert oder dekrementiert wird,
- zyklisches Prüfen, ob der Wert in dem Zähler-Register (6) den Endwert (10a) erreicht hat und mit dem Zeitpunkt, bei welchem der Endwert (10a) erreicht ist, wird die aktuelle Zeit der Systemuhr (100) in einen Systemuhrspeicher (7) geladen,
- Errechnen einer möglicherweise zwischen der Systemuhr (100) und der Taktquelle (3) entstandenen zeitlichen Verschiebung durch eine Restdivision, wobei der Startwert (10) der Divisor ist und der Dividend die Zeit im Systemuhrspeicher (7) ist,
- für den Fall, dass die Restdivision eine Verschiebung ungleich Null ergibt, wird die Taktquelle (3) derart angepasst, dass bei einer zukünftigen Restdivision nach einem erneuten Erreichen des Endwertes (10a) die Verschiebung minimiert wird,
und
zur Erzeugung des Ereignis-Signals (21) stetig wiederholend folgender Schritt ausgeführt wird:
- zyklischer Vergleich eines Wertes eines Signal-Taktes (31) mit dem aktuellen Wert des Zähler-Registers (6) und für den Fall, dass der aktuelle Wert des Zähler-Registers (6) den Wert des Signal-Taktes (31) erreicht hat, wird mit dem Zeitpunkt des Erreichens das Ereignis-Signal (21) erzeugt.

2. Verfahren nach Anspruch 1 zum Einsatz in der industriellen Kommunikation für den Betrieb von isochronen Applikationen (201,..,20n).

3. Verfahren nach Anspruch 1 oder 2, wobei die Werte: Startwert (10), Endwert (10a) und Signal-Takt (31) im Rahmen einer Feldbusprojektierung mittels eines Engineeringsystems (101) für einen taktsynchronen Datenaustausch vorgegeben werden.

4. Verfahren nach einem der Ansprüche 1 bis 3, wobei ein Ausfall der Systemuhr (100) erkannt wird und die Erzeugung des Ereignis-Signals (21) auch ohne eine Synchronisierung der Taktquelle (3) mit der Systemuhr (100) erfolgt, wobei bei Wiederkehr der Systemuhr (100) die Taktquelle (3) erneut synchronisiert wird ohne die Erzeugung des Ereignis-Signals (21) zu unterbrechen.

5. Verfahren nach einem der Ansprüche 1 bis 4, wobei eine Mehrzahl von Ereignis-Signalen (21,22,23,..,2n) erzeugt werden, wobei für die Erzeugung der weiteren Ereignis-Signale (21,22,23,..,2n) zyklische Vergleiche von weiteren Werten von weiteren Signal-Takten (31,32,33,..,3n) mit dem aktuellen Wert des Zähler-Registers (6) erfolgen und für den Fall, dass der aktuelle Wert des Zähler-Registers (6) den Wert eines der Signal-Takte (31,32,33,..,3n) erreicht hat, wird mit dem Zeitpunkt des Erreichens das entsprechende Ereignis-Signal (21,22,23,..,2n) erzeugt.

6. Vorrichtung (1) zur Erzeugung eines Ereignis-Signals (21), aufweisend einen Synchronisationsteil (50) mit
- einem Eingang (2) zum Einlesen einer Zeit einer Systemuhr (100) in einen Systemuhrspeicher (7),
- einer Taktquelle (3) mit einem steuerbaren Zähltakt (4),
- einem Zähler-Register (6) ausgestaltet einen Startwert (10) zu Laden und den Startwert (10) mit Hilfe der Taktquelle (3) Schrittweise zu inkrementieren oder zu dekrementieren,
- einem Prüfmittel (8) ausgestaltet zu prüfen, ob der momentane Wert des Zähler-Registers (6) einen Endwert (10a) erreicht hat und für den Fall das der Endwert (10a) erreicht ist einen Ladebefehl (9) an den Systemuhrspeicher (7) zum Laden der momentanen Zeit der Systemuhr (100) auszugeben,
- einem Divisionsmittel (40) ausgestaltet eine möglicherweise zwischen der Systemuhr (100) und der Taktquelle (3) entstandene zeitlichen Verschiebung durch eine Restdivision zu ermitteln, wobei der Startwert (10) der Divisor ist und der Dividend die Zeit im Systemuhrspeicher (7) ist,
- einem Kompensationsmittel (41) ausgestaltet für den Fall, dass die Restdivision eine Verschiebung ungleich Null ergibt, die Taktquelle (3) derart zu steuern, dass bei einer zukünftigen Restdivision nach einem erneuten Erreichen des Endwertes (10a) die Verschiebung minimiert wird, und weiterhin aufweisend
einen Signalteil (51) ausgestaltet mit
- einem Ausgang (I1) zum Ausgeben des Ereignis-Signals (21),
- einer Vergleichseinheit (11) ausgestaltet kontinuierlich einen Vergleich des aktuellen Wertes des Zähler-Registers (6) mit einem Wert eines Signal-Taktes (31) durchzuführen, weiterhin ausgestaltet mit dem Zeitpunkt des Erreichens des Wertes des Signal-Taktes (31) das Ereignis-Signal (21) zu erzeugen.

7. Vorrichtung (1) nach Anspruch 6, mit einer Programmierschnittstelle (102) wobei Speicherbereiche für die Werte: Startwert (10), Endwert (10a) und Signal-Takt (31) vorhanden sind, welche im Rahmen einer Feldbusprojektierung mittels eines Engineeringsystems (101) über die Programmierschnittstelle (102) parametrierbar sind.

8. Vorrichtung (1) nach Anspruch 6 oder 7, ausgestaltet einen Ausfall der Systemuhr (100) zu erkennen und die Erzeugung des Ereignis-Signals (21) auch ohne eine Synchronisierung der Taktquelle (3) mit der Systemuhr (100) weiterzuführen, wobei bei Wiederkehr der Systemuhr (100) die Taktquelle (3) erneut synchronisierbar ist ohne die Erzeugung des Ereignis-Signals (21) zu unterbrechen.

9. Vorrichtung (1) nach einem der Ansprüche 6 bis 8, aufweisend eine Mehrzahl an Vergleichseinheiten (11,12,..,1n) ausgestaltet jeweils kontinuierlich einen Vergleich des aktuellen Wertes des Zähler-Registers (6) mit einem entsprechend zugehörigen Wert eines Signal-Taktes (31,32,..,3n) durchzuführen, weiterhin ausgestaltet mit dem jeweiligen Zeitpunkt des Erreichens des jeweiligen Wertes der Signal-Takte (31,32,..,3n) ein jeweiliges Ereignis-Signal (21,22,..,2n) zu erzeugen, weiterhin aufweisend eine Mehrzahl an Ausgängen (I1,I2,..,In) zum Ausgeben des jeweiligen Ereignis-Signales (21, 22, 23, .. , 2n) .

10. Industrielles Steuerungssystem (300) bei welchen eine Mehrzahl an Funktionssystemen (301,302,..,30n) miteinander synchronisiert werden, aufweisend eine Vorrichtung (1) nach einem der Ansprüche 6 bis 9, wobei zumindest ein Funktionssystem (302) als ein Ein-/Ausgabeperipherie-Baustein für industrielle Prozesswerte ausgestaltet ist und weiterhin ausgestaltet ist durch einen angeschlossenen Ausgang (In) mit Hilfe des Ereignis-Signals (2n) die Prozesswerte zu bestimmten Zeitpunkten zu übernehmen.
